# FASCICULE DE BREVET EUROPEEN

(11) **EP 0 894 770 B1**
(45) Date de publication et mention de la délivrance du brevet: **30.10.2002**
(21) Numéro de dépôt: 98410086.7
(22) Date de dépôt: 30.07.1998
(51) Int. Cl.: C02F 9/00, C02F 1/44, B01D 61/16

(54) **Procédé et dispositif pour le traitement des effluents polluants opaques contenus dans les eaux de rejet industrielles et/ou agricoles**
Prozess und Vorrichtung zur Behandlung von undurchsichtigen Verunreinigungen in industriellen und/oder landwirtschaftlichen Abwässern
Process and device for treating opaque pollutants in industrial and/or agricultural wastewater

(30) Priorité: 30.07.1997 FR 9709977
(43) Date de publication de la demande: 03.02.1999
(73) Titulaire: Procoat Technologies, 73370 Le Bourget du Lac (FR)
(72) Inventeur: Trichot, CLaude, 73100 Tresserve (FR)
(74) Mandataire: Hecké, Gérard

(56) Documents cités:
- WO-A-91/10500
- DE-A- 4 125 471
- FR-A- 2 729 381
- US-A- 4 876 100
- PATENT ABSTRACTS OF JAPAN vol. 006, no. 235 (C-136), 20 novembre 1982 & JP 57 139103 A (NIPPON ZEON KK), 27 août 1982
- JONSSON A-S ET AL: "Treatment of paper coating colour effluents by membrane filtration" DESALINATION, vol. 3, no. 105, juillet 1996, page 263-276 XP004019028
- PATENT ABSTRACTS OF JAPAN vol. 015, no. 413 (C-0877), 22 octobre 1991 & JP 03 169394 A (FUJITSU LTD), 23 juillet 1991
- PATENT ABSTRACTS OF JAPAN vol. 013, no. 273 (C-609), 22 juin 1989 & JP 01 067296 A (KOMORI PRINTING MACH CO LTD;OTHERS: 01), 13 mars 1989

## Description

L'invention concerne un procédé et un dispositif pour le traitement des effluents polluants opaques contenus dans les eaux de rejet industrielles et/ou agricoles.

Les eaux de lavage des installations de papeteries sont génératrices de pollution par la présence de matières organiques et minérales qui provoquent l'opacité de l'eau. Ces effluents de couchage renferment différentes sortes de pigments et de liants, notamment des carbonates, latex, et kaolin selon le type de sauce de couchage (offset mat, offset brillant, héliogramme).

Ces effluents polluants sont très opaques, et doivent être traités avant leur rejet pour être en conformité avec les nouvelles normes de protection de l'environnement.

Plusieurs procédés ont déjà été proposés pour traiter ces effluents, et récupérer les sauces de couchage sans additif chimique par floculation (voir document WO 91/1050).

Le procédé par ultrafiltration tangentielle sur membrane permet de séparer les agents de pollution des effluents de couchage, et utilise généralement des membranes de filtration organique déposées sur la paroi interne d'un tube poreux. L'usage de membranes organiques présentent néanmoins deux inconvénients majeurs : elles ne résistent pas aux bases et acides de lavage lorsque l'installation doit être nettoyée, et une montée en concentration ( entre 40 % et 50 % de matières sèches ) provoque rapidement leur colmatage, avec l'arrêt obligatoire du fonctionnement de l'installation pour leur régénération.

D'autres procédés proposent la séparation par cyclonage ou la centrifugation au moyen d'une centrifugeuse à assiettes. Aucun de ces procédés n'est efficace pour le traitement des sauces de couchage, et des eaux vinicoles ou des lisiers, car le cyclonage permet seulement la récupération de très grosses particules, tandis que le concentrât récupéré par la centrifugeuse risque d'être dilué dans le filtrat.

Le document FR-A-2729381 décrit un procédé pour le traitement des effluents contenant des déchets organiques, dans lequel:
- on soumet l'effluent à une opération de décantation centrifuge pour obtenir un concentrat avec une concentration de matières sèches supérieur à 20%, et un liquide qui comporte un taux maximum de 1g/l de matières solides,
- on introduit le liquide dans un dispositif d'ultrafiltration pour séparer un perméat contenant de l'eau et des matières dissoutes, et un rétentat renfermant les matières en suspension.
L'opération d'ultrafiltration est suivie d'une opération d'osmose inverse pour obtenir un perméat directement jetable en l'état dans la nature.

Un premier objet de l'invention consiste à élaborer un procédé de traitement efficace des effluents pour éviter tout rejet polluant. Dans le cas des effluents de papeterie, le procédé est particulièrement apte à récupérer les sauces de couchage contenues dans les eaux de lavage, et de les réutiliser par introduction dans les sauces fraîches

Le procédé selon l'invention est caractérisé en ce que :
- on récupère les effluents à une concentration en matières sèches de l'ordre de 1,5 % à 3 %,
- on utilise dans le dispositif d'ultrafiltration tangentielle, une membrane céramique ayant un pouvoir de coupure de 20 à 50 nanomètres, qui filtre le liquide surnageant issu de la décantation centrifuge pour retenir les liants constituant le rétentat, lequel renferme les matières en suspension avec une concentration de 10 à 30 %,
- et on mélange ensuite le concentrat et le rétentat pour les stocker dans un conteneur ou les réutiliser.

Un tel procédé combine deux techniques : la centrifugation dans le bac décanteur centrifuge qui sépare au maximum les charges, et l'ultrafiltration qui retient les liants. Le liquide surnageant rentre à de faibles concentrations de l'ordre de 0,2 % à 0, 7 % dans les membranes d'ultrafiltration en céramique, et ne provoque pas le colmatage de ces dernières.

Selon une caractéristique de l'invention, l'effluent subit une préfiltration avant l'arrivée dans le bac décanteur centrifuge pour éliminer les particules ou autres impuretés susceptibles d'affecter le recyclage des charges. La préfiltration est mise en oeuvre au moyen d'un filtre vibrant délivrant un effluent préfiltré envoyé dans une première cuve de récupération où il est soumis à une agitation permanente.

Selon une autre caractéristique de l'invention, la membrane en céramique est traversée en continu à débit constant par le liquide surnageant, lequel circule dans la boucle de tuyauterie à une vitesse prédéterminée assurant l'autonettoyage de la membrane céramique. La pression de filtration à travers la membrane est supérieure à un bar maximum par rapport à la pression de sortie du perméat pour éviter tout effet de colmatage de la membrane.

Dans le cas de l'application pour des sauces de couchage, le concentrât et le rétentat sont mélangés pour obtenir une sauce de couchage avec une concentration de l'ordre de 35% à 50 %, susceptible d'être réintroduite dans les sauces fraîches à hauteur de 5 % à 15 % du débit de consommation. La densité et le débit du mélange de la sauce de couchage récupérée sont ajustés au moyen d'un débitmètre massique et volumique coopérant avec une vanne de régulation insérée à la sortie des tuyauteries respectives du concentrat et du rétentat.

Dans le cas de l'application pour des eaux vinicoles ou des lisiers, le mélange du rétentat et du concentrat récupérés reste sous forme liquide, et est stocké dans un conteneur permettant un épandage ultérieur. Les composants fertilisants des produits à épandre à partir du conteneur sont ainsi conservés dans leur totalité.

Un deuxième objet de l'invention consiste à réaliser un dispositif de traitement mettant en oeuvre le procédé décrit précédemment.

Le dispositif de traitement des effluents contenus dans les eaux de lavage en provenance des sauces de couchage est caractérisé en ce qu'il comporte
- un bac décanteur centrifuge agencé pour séparer les matières en suspension dans l'effluent à traiter, et à récupérer les charges et pigments constituants le concentrat, sans produit chimique de floculation,
- un dispositif à ultrafiltration à membrane céramique qui filtre le liquide surnageant issu du bac décanteur centrifuge pour retenir les liants constituant le rétentat,
- et des moyens pour mélanger le concentrat et le rétentat selon une densité et un débit prédéterminés.

Selon un mode de réalisation préférentiel, le bac décanteur centrifuge comporte un bol de centrifugation destiné à délivrer le liquide surnageant , et une vis d'extraction tronconique pour l'évacuation du concentrat vers un bac d'homogénéisation, le bol centrifuge et la vis d'extraction tournant à des vitesses de rotation différentes pour ajuster la concentration du concentrat.

Le dispositif à ultrafiltration comprend une boucle de tuyauterie équipée d'une pompe de circulation du liquide surnageant, d'au moins un module de filtration tangentielle ayant une membrane à support céramique, dotée d'un pouvoir de coupure de 20 nanomètres, et de moyens pour faire circuler le liquide surnageant dans la boucle de tuyauterie avec une vitesse de l'ordre de 5 m/s pour assurer un autonettoyage de la membrane.

D'autres avantages et caractéristiques ressortiront plus clairement de la description qui va suivre d'un mode de mise en oeuvre du procédé selon l'invention, donné à titre d'exemple non limitatif et représenté aux dessins annexés dans lesquels :
- la figure 1 est une vue schématique du dispositif de traitement selon l'invention, appliqué à des eaux de lavage en provenance de sauces de couchage des installations de papeteries ;
- la figure 2 montre une vue de détail du bac décanteur centrifuge utilisé avant l'opération d'ultrafiltration ;
- la figure 3 est une vue similaire du dispositif de la figure 1, appliqué au traitement en continu des eaux vinicoles ou des lisiers.

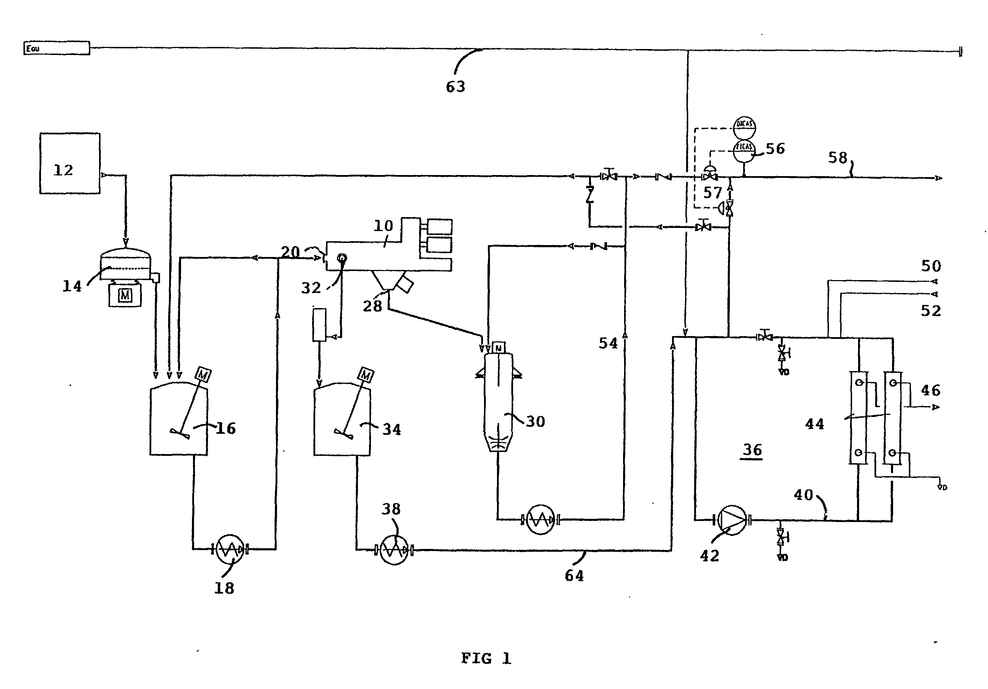

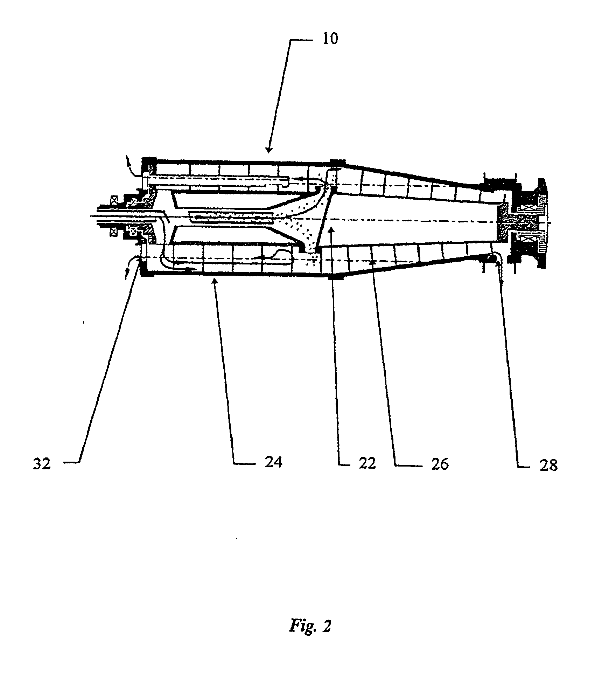

L'invention décrite en référence aux figures 1 et 2, a pour but de récupérer les sauces de couchage contenues dans les eaux de lavage et de les réutiliser pour éviter tous rejets polluants. L'épuration s'effectue en deux étapes au cours desquelles les effluents passent d'abord dans un bac décanteur centrifuge permettant de séparer les matières en suspension, et de récupérer les charges présentes, puis dans un système d'ultrafiltration à membrane céramique qui filtre toutes les particules de poids moléculaire moyen de manière à retenir les liants.

La première étape du procédé est la séparation des matières sèches en suspension dans les effluents. La séparation intervient au moyen d'un bac décanteur centrifuge 10 alimenté avec un effluent de 1,5% à 3 % de concentration contenu dans une cuve de stockage 12 ayant environ une capacité variable selon le débit horaire. Si la concentration des effluents prélevés est supérieure à 1,5 % à 3 % , on procédera au préalable à une dilution appropriée dans la cuve de stockage 12. Pour éviter l'apport d'éléments indésirables dans la couche, une préfiltration est effectuée à l'aide d'un filtre vibrant 14 connecté à la sortie de la cuve de stockage 12. Cette préfiltration avant l'arrivée dans le bac décanteur centrifuge 10 permet d'éliminer les fibres, particules de couches sèches, grains de sable, et toutes autres impuretés susceptibles d'affecter le recyclage des charges.

L'effluent préfiltré dans le filtre vibrant 14 est ensuite envoyé dans une première cuve de récupération 16 où il est soumis à une agitation permanente , pour mélanger les différents effluents pouvant présenter des concentrations différentes. Une pompe 18 est branchée en sortie de la cuve de récupération 16 dans un circuit de bouclage pour faire varier le débit d'effluent à l'entrée 20 du bac décanteur centrifuge 10. La suspension d'effluent à l'intérieur du bac décanteur centrifuge 10 se trouve centrifugé dans un rotor 22 pour accélérer la sédimentation de particules solides que l'on souhaite séparer d'un liquide. Le rotor 22 comporte un bol de centrifugation 24 et une vis d'extraction 26 tournant à haute vitesse, la vis 26 légèrement moins vite que le bol 24. La centrifugation s'opère dans le bol 24, et la vis 26 tronconique évacue le solide décanté vers la sortie 28. Suivant les vitesses plus ou moins rapides du bol 24 et de la vis 26, le concentrat sortira plus ou moins concentré.

De préférence la concentration recherchée est située entre 50 % et 60 % de matières sèches.

Le concentrat à la sortie 28 est ensuite introduit dans un bac d'homogénéisation 30 avec agitation rapide pour homogénéiser la sauce concentrée, laquelle contient principalement des pigments (kaolin - carbonate - titane - blanc satin) et une quantité très réduite de liant (amidon - latex - additif).

Le liquide surnageant à l'autre sortie 32 du bol de centrifugation 30 est composé principalement d'eau, d'amidon, de latex et d'additif. L'ensemble de ces liants est dilué dans l'eau, et ne peut être extrait par centrifugation, les particules étant inférieures au micron. Le liquide surnageant est stocké dans une deuxième cuve de récupération 34 avec agitation permanente pour éviter toute décantation des liants.

Cette première phase de traitement ne permet pas la récupération d'un produit réutilisable étant donné que l'ensemble des liants se trouve dilué dans la liquide surnageant à hauteur de 0,5 % de matières sèches. Le liquide surnageant ainsi stocké dans la deuxième cuve 34 devra être traité pour récupération des liants, avec rejet ou récupération de l'eau. Aucun agent floculant ne peut être utilisé si l'on veut réutiliser le produit récupéré.

La deuxième étape du procédé est la séparation des matières sèches diluées dans l'eau du liquide surnageant.

La séparation s'effectue sans additif chimique, par un dispositif d'ultrafiltration, désigné par le repère général 36. Le liquide surnageant à la sortie de la deuxième cuve de récupération 34 est refoulé à des faibles concentrations de l'ordre de 0,2 % à 0,7 % dans le dispositif d'ultrafiltration 36 au moyen d'une pompe 38 à vitesse variable pour ajuster le débit de liquide à traiter.

Le dispositif d'ultrafiltration 36 est constitué d'une boucle de tuyauterie 40 équipée d'une pompe de circulation 42 et d'au moins un module de filtration 44 tangentielle. L'alimentation de la boucle 40 s'effectue en continu à débit constant avec le liquide surnageant, lequel devra circuler dans la boucle à une vitesse de 5m/s afin d'assurer un autonettoyage des membranes à support céramique des modules de filtration 44. Les membranes céramiques ZrO2 sont montées sur un support multicanaux dans un carter tubulaire ayant environ 1,20 mètres. Elles permettent d'obtenir un pouvoir de coupure de 20 nanomètres (correspondant à 50 K daltons, le dalton étant une unité de masse égale à 1/N grammes, N étant le nombre d'Avogadro.)

Le liquide traité par ultrafiltration est séparé en deux phases :
- le perméat traversant les membranes des modules de filtration 44, et contenant exclusivement des matières dissoutes de faibles poids moléculaires,
- le rétentat renfermant les matières en suspension des liants, ainsi que les produits en solution de poids moléculaires élevés.

Le perméat est évacué par la tubulure 46 en sortie des modules de filtration 44, et le rétentat sort par la tubulure 48.

Pour réduire au maximum le problème de bouchage des membranes, on utilise une pression transmembranaire supérieure de 1 bar maximum par rapport à la pression de sortie du perméat (eau claire). Pour chaque équipement, la surface membranaire sera différente en fonction du type d'effluent à traiter. Le produit restant dans la boucle sera reconcentré au maximum à 30 % permettant ainsi de garder un débit du perméat important . Par rapport à la membrane organique, la membrane céramique permet de travailler à des pressions plus importantes, et elle est insensible à la température et aux produits de nettoyage (soude/acide), injectés par les tubulures 50, 52 pour assurer le lavage du dispositif d'ultrafiltration 36.

Le rétentat ainsi récupéré se situe entre 10 % et 30 % de matières sèches constituées d'amidon, de latex et d'additifs. Plusieurs modules de filtration 44 peuvent être disposés en parallèle dans la boucle 40.

Ce procédé associant deux technologies permettra la récupération des produits de couchage, ce qui évite ainsi l'achat de nouvelles matières premières.

Au cours d'une troisième étape, on mélange ensuite dans la tubulure 58 le concentrat de la tubulure 54 avec le rétentat de la tubulure 48, de manière à obtenir une sauce de couchage à une concentration de 35% à 50 % pouvant être réintroduite dans des sauces de précouche et topcouche.

Le perméat dans la tubulure 46 ne contient plus que de faibles quantités de matières dissoutes, et est formé par de l'eau parfaitement limpide pouvant être recyclée, ou être rejetée à la station d'épuration. Les matières premières de couchage récupérées ne sont pas altérées, et conservent leurs propriétés d'origine.

Un débitmètre 56 massique et volumique est placé avec des vannes de régulation 57 dans les tubulures de sortie 48, 54 pour ajuster la densité et le débit du mélange de la sauce de couchage récupérée.

Le rendement d'une telle installation est optimum, étant donné que la séparation des charges de l'effluent dans le bac décanteur centrifuge 10 s'effectue à plus de 90 %, ce qui permet au liquide surnageant de rentrer dans le dispositif d'ultrafiltration avec un taux minimum de matières sèches inférieures à 0,25%.

La densité à l'intérieur de la boucle de tuyauterie 40 augmente très peu, et autorise un traitement sans colmatage rapide des membranes des modules de filtration 44.

Le fonctionnement en ligne du bac décanteur centrifuge 10 et du dispositif d'ultrafiltration 40 est parfaitement possible après un dimensionnement correct de la surface filtrante totale des membranes, et le nombre des modules de filtration 44 en fonction du débit désiré.

Le dispositif des figures 1 et 2 est particulièrement applicable dans les papeteries et cartonneries.

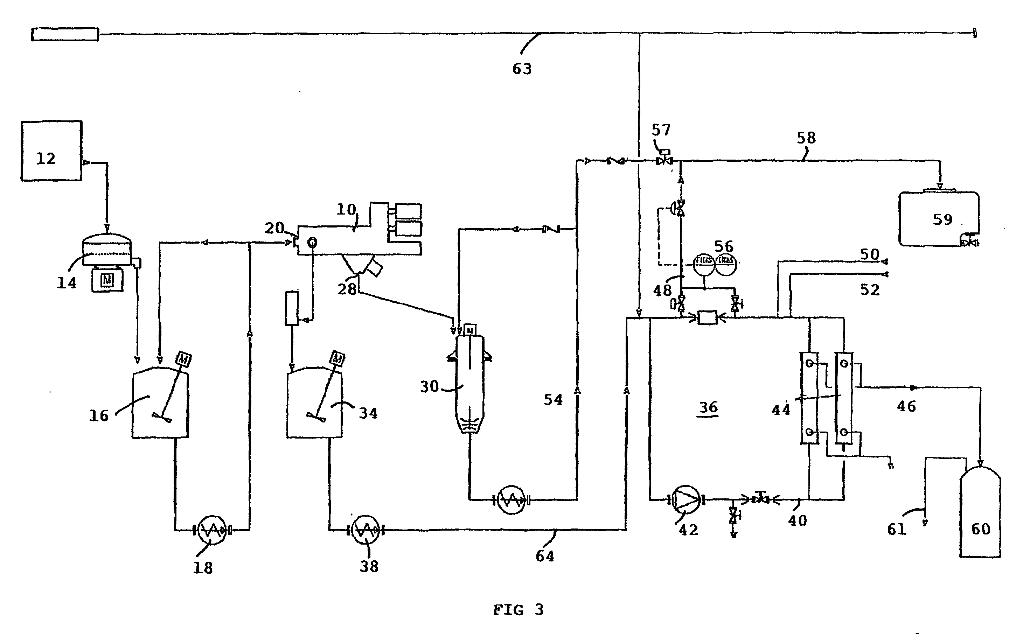

En référence à la figure 3, le dispositif est utilisé pour d'autres traitements d'effluents, notamment des eaux vinicoles et des lisiers des installations agricoles. Les mêmes numéros de repères seront utilisés pour désigner des pièces ou appareils identiques à ceux de la figure 1.

Après la récupération des effluents à une concentration en matière sèche de l'ordre de 1,5% à 3%, intervient la séparation des matières sèches en suspension contenues dans les effluents, au moyen du bac décanteur centrifuge 10. On obtient un concentrat des matières sèches végétales à une concentration de 20% à 30%, un liquide surnageant composé de matières sèches en suspension et en dilution, ainsi que d'autres produits spécifiques à l'effluent à traiter.

Le liquide surnageant est introduit par la pompe 38 dans le dispositif d'ultrafiltration 36 tangentielle afin de séparer les matières sèches diluées dans l'eau au moyen des membranes des modules de filtration 44, ayant un pouvoir de coupure de 6 à 20 nanomètres. A la sortie des modules de filtration 44, on récupère le perméat contenant de l'eau, des matières dissoutes de faibles poids moléculaires exempt de virus et de bactéries. Un rétentat composé d'eau, de matières en suspension et dissoutes à une concentration de 10% à 20%, est évacué par la tubulure 48.

La prochaine étape est la récupération du concentrat et du rétentat . Le mélange des deux produits récupérés dans la tubulure 58, reste sous forme liquide, et est stocké dans un conteneur 59 permettant un épandage ultérieur. Les composants fertilisants des produits à épandre à partir du conteneur 59 sont ainsi conservés dans leur totalité.

Le traitement du perméat ou filtrat ( eau colorée) à la sortie de la tubulure 46 s'effectue par circulation dans une bouteille 60 contenant du charbon actif pour obtenir un effet de désodorisation et de décoloration. Une eau claire peut ensuite être rejetée dans de bonnes conditions par la tubulure 61, avec éventuellement l'adjonction de produits neutralisants.

Sur les deux dispositifs des figures 1 et 3, un circuit d'eau 63 peut être branché sur le circuit de liaison 64 entre la pompe 38 et le dispositif d'ultrafiltration 36.

## Revendications

1. Procédé pour le traitement des effluents polluants opaques contenus dans les eaux de rejet industrielles et/ou agricoles, dans lequel:
- on soumet l'effluent à une opération de décantation centrifuge pour obtenir un concentrat avec une concentration de matières sèches supérieur à 20%, et un liquide surnageant composé de matières sèches en suspension et en dilution.
- on introduit le liquide dans un dispositif d'ultrafiltration (36) pour séparer un perméat contenant de l'eau et des matières dissoutes, et un rétentat renfermant les matières en suspension,
- **caractérisé en ce que** :
- on récupère les effluents à une concentration en matières sèches de l'ordre de 1,5 % à 3 %,
- on utilise dans le dispositif d'ultrafiltration (36) tangentielle, une membrane céramique ayant un pouvoir de coupure de 20 à 50 nanomètres, qui filtre le liquide surnageant issu de la décantation centrifuge pour retenir les liants constituant le rétentat, lequel renferme les matières en suspension avec une concentration de 10 à 30 %,
- et on mélange ensuite le concentrat et le rétentat pour les stocker dans un conteneur (59) ou les réutiliser.

2. Procédé selon la revendication 1, **caractérisé en ce que** l'effluent subit une préfiltration avant l'opération de décantation centrifuge pour éliminer les particules ou autres impuretés susceptibles d'affecter le recyclage des charges.

3. Procédé selon la revendication 2, **caractérisé en ce que** la préfiltration est mise en oeuvre au moyen d'un filtre vibrant (14) délivrant un effluent préfiltré envoyé dans une première cuve de récupération (16) où il est soumis à une agitation permanente.

4. Procédé selon la revendication 1, **caractérisé en ce que** le concentrat issu de l'opération de décantation centrifuge est introduit dans un bac d'homogénéisation (30) à agitation rapide pour mélanger la sauce concentrée du concentrat.

5. Procédé selon la revendication 1, **caractérisé en ce que** la membrane céramique du dispositif d'ultrafiltration (36) tangentielle est traversée en continu à débit constant par le liquide surnageant, lequel circule dans la boucle de tuyauterie (40) à une vitesse prédéterminée assurant l'autonettoyage de la membrane céramique, la pression de filtration à travers la membrane étant supérieure à un bar maximum par rapport à la pression de sortie du perméat pour éviter tout effet de colmatage de la membrane.

6. Procédé selon la revendication 1, appliqué à des eaux de lavage en provenance de sauces de couchage usées contenant différentes sortes de pigments et de liants, **caractérisé en ce que** :
- le liquide surnageant renferme des liants, notamment de l'amidon, du latex et des additifs dilués dans l'eau,
- le concentrat et le rétentat sont mélangés pour obtenir une sauce de couchage avec une concentration de l'ordre de 35% à 50 %, susceptible d'être réintroduite dans les sauces fraîches à hauteur de 5 % à 15 % du débit de consommation.

7. Procédé selon la revendication 1, **caractérisé en ce que** la densité et le débit du mélange de la sauce de couchage récupérée sont ajustés au moyen d'un débitmètre (56) massique et volumique coopérant avec des vannes de régulation (57) insérées à la sortie des tuyauteries (54, 48) respectives du concentrat et du rétentat.

8. Dispositif pour le traitement des effluents polluants opaques contenus dans les eaux de rejet industrielles et/ou agricoles, et comportant :
- un bac décanteur centrifuge (10) agencé pour séparer les matières en suspension dans l'effluent à traiter, et à récupérer les charges et pigments constituants le concentrat, sans produit chimique de floculation,
- un dispositif à ultrafiltration (36) à membrane céramique qui filtre le liquide surnageant issu du bac décanteur centrifuge (10) pour retenir les liants constituant le rétentat,
- et des moyens pour mélanger le concentrat et le rétentat selon une densité et un débit prédéterminés.

9. Dispositif pour le traitement des effluents selon la revendication 8, **caractérisé en ce que** le bac décanteur centrifuge (10) comporte un bol de centrifugation (24) destiné à délivrer le liquide surnageant, et une vis d'extraction (26) tronconique pour l'évacuation du concentrat vers un bac d'homogénéisation (30), le bol centrifuge (10) et la vis d'extraction (26) tournant à des vitesses de rotation différentes pour ajuster la concentration du concentrat.

10. Dispositif pour le traitement des effluents selon la revendication 8, **caractérisé en ce que** le dispositif à ultrafiltration (36) comprend une boucle de tuyauterie (40) équipée d'une pompe de circulation (42) du liquide surnageant, d'au moins un module de filtration (44) tangentielle ayant une membrane à support céramique, dotée d'un pouvoir de coupure de 20 nanomètres, et de moyens pour faire circuler le liquide surnageant dans la boucle de tuyauterie avec une vitesse de l'ordre de 5 m/s pour assurer un autonettoyage de la membrane.

## Claims

1. A process for treating opaque polluting effluents contained in industrial and/or agricultural waste water, wherein:
- the effluent undergoes a centrifugal decanting operation to obtain a concentrate with a concentration of dry matter greater than 20 % and a supernatant liquid composed of suspended and diluted dry matter,
- the liquid is inlet to an ultrafiltration device (36) to separate a permeate containing water and dissolved matter, and a retentate containing the suspended matter,
**characterized in that**:
- the effluents are recovered with a concentration of dry matter of about 1.5 % to 3 %,
- a ceramic membrane having a rating of 20 to 50 nanameters which filters the supernatant liquid resulting from centrifugal decanting is used in the tangential ultrafiltration device (36) to retain the binders constituting the retentate, which contains the suspended matter with a concentration of 10 to 30 %,
- and the concentrate and retentate are then mixed to store them in a container (59) or to re-use them.

2. The process according to claim 1, **characterized in that** the effluent undergoes prefiltration before the centrifugal decanting operation to eliminate the particles or other impurities liable to affect recycling of the charges.

3. The process according to claim 2, **characterized in that** prefiltration is implemented by means of a vibrating filter (14) delivering a prefiltered effluent sent to a first recovery tank (16) where it is subjected to permanent stirring.

4. The process according to claim 1, **characterized in that** the concentrate resulting from the centrifugal decanting operation is inlet to a homogenisation tank (30) with highspeed stirring to mix the concentrated slip of the concentrate.

5. The process according to claim 1, **characterized in that** the supernatant liquid flows continuously through the ceramic membrane of the tangential ultrafiltration device (36) at constant flowrate, the supernatant liquid flowing in the piping loop (40) at a preset speed ensuring self-cleaning of the ceramic membrane, the filtration pressure through the membrane being one bar maximum greater than the outlet pressure of the permeate to prevent any clogging effect of the membrane.

6. The process according to claim 1, applied to washing waters coming from waste coating slips containing different sorts of pigments and binders, **characterized in that**:
- the supernatant liquid contains binders, in particular starch, latex and additives diluted in water,
- the concentrate and retentate are mixed to obtain a coating slip with a concentration of about 35 % to 50 % able to be re-introduced into the fresh slips in a ratio of 5 % to 15 % of the consumption rate.

7. The process according to claim 1, **characterized in that** the density and flowrate of the recovered coating slip mixture are adjusted by means of a mass and volumetric flowmeter (56) operating in conjunction with regulating valves (57) inserted at the outlet of the respective pipes (54, 48) of the concentrate and retentate.

8. A device for treating opaque polluting effluents contained in industrial and/or agricultural waste water, comprising:
- a centrifugal decanting tank (10) arranged to separate the suspended matter in the effluent to be treated and to recover the charges and pigments constituting the concentrate, without any chemical flocculation product,
- an ultrafiltration device (36) with a ceramic membrane that filters the supernatant liquid coming from the centrifugal decanting tank (10) to retain the binders constituting the retentate,
- and means for mixing the concentrate and retentate with a preset density and flowrate.

9. A device for treating effluents according to claim 8, **characterized in that** the centrifugal decanting tank (10) comprises a centrifugation bowl (24) designed to deliver the supernatant liquid and a tapered extraction screw (26) to remove the concentrate to a homogenisation tank (30), the centrifugation bowl (24) and extraction screw (26) rotating at different rotation speeds to adjust the concentration of the concentrate.

10. A device for treating effluents according to claim 8, **characterized in that** the ultrafiltration device (36) comprises a piping loop (40) equipped with a circulating pump (42) of the supernatant liquid, at least one tangential filtration module (44) having a membrane with a ceramic support with a rating of 20 nanometers, and means for making the supernatant liquid flow in the piping loop with a speed of about 5 m/s to perform self-cleaning of the membrane.

## Patentansprüche

1. Verfahren zur Behandlung trüber Schadstoffe, die in Abwässern aus Industrie und/oder Landwirtschaft enthalten sind, bei dem
- der Schadstoff einem Zentrifugal-Klärschritt unterzogen wird, um ein Konzentrat mit einer Trockensubstanz-Konzentration von über 20 % und eine aufschwimmende Flüssigkeit zu ergeben, die aus ungelösten und verdünnten Trockensubstanzen besteht,
- die Flüssigkeit in eine Ultrafiltrationsvorrichtung (36) geleitet wird, damit ein Wasser und gelöste Stoffe enthaltendes Permeat und ein die ungelösten Substanzen enthaltendes Retentat getrennt werden,
- **dadurch gekennzeichnet, dass**:
- die Abwässer mit einer Trockensubstanz-Konzentration von etwa 1,5 bis 3 % aufgenommen werden,
- in der Tangential-Ultrafiltrationsvorrichtung (36) eine Keramikmembran mit einem Abschaltvermögen von 20 bis 50 Nanometern verwendet wird, die die aufschwimmende, aus der Zentrifugal-Klärung hervorgegangene Flüssigkeit filtert, um die Bindemittel, die das Retentat bilden, zurückzuhalten, das die ungelösten Substanzen mit einer Konzentration von 10 bis 30 % enthält,
- und anschließend Konzentrat und Retentat für die Lagerung in einem Behälter (59) oder die Wiederverwendung vermischt werden.

2. Verfahren nach Anspruch 1, **dadurch gekennzeichnet, dass** der Schadstoff vor der Zentrifugal-Klärung vorgefiltert wird, damit Partikel oder andere Schmutzstoffe herausgefiltert werden, welche die Wiederverwertbarkeit der Füllstoffe beeinträchtigen könnten.

3. Verfahren nach Anspruch 2, **dadurch gekennzeichnet, dass** die Vorfilterung mittels eines Vibrierfilters (14) erfolgt, wodurch ein vorgefilterter Schadstoff entsteht, der in einen ersten Rückgewinnungsbehälter (16) geleitet wird, in dem er ständig bewegt wird.

4. Verfahren nach Anspruch 1, **dadurch gekennzeichnet, dass** das aus der Zentrifugal-Klärung hervorgegangene Konzentrat in einen Homogenisierungsbehälter (30) mit Schnellrührwerk zum Durchmischen der konzentrierten Masse des Konzentrats geleitet wird.

5. Verfahren nach Anspruch 1, **dadurch gekennzeichnet, dass** die Keramikmembran der Tangential-Ultrafiltrationsvorrichtung (36) mit konstantem Durchsatz kontinuierlich von der aufschwimmenden Flüssigkeit durchströmt wird, die in dem Rohrleitungskreislauf (40) mit einer vorbestimmten Geschwindigkeit zirkuliert, die die Selbstreinigung der Keramikmembran garantiert, wobei der Filterungsdruck durch die Membran zur Vermeidung einer Verstopfung der Membran maximal ein Bar höher ist als der Ausgangsdruck des Permeats.

6. Verfahren nach Anspruch 1, das auf Waschwasser aus verbrauchten Streichmassen angewandt wird, die unterschiedliche Arten von Pigmenten und Bindemitteln enthalten, **dadurch gekennzeichnet, dass**:
- die aufschwimmende Flüssigkeit Bindemittel, insbesondere Stärke, Latex und mit Wasser verdünnte Zuschlagmittel enthält,
- das Konzentrat und das Retentat vermischt werden, um eine Streichmasse mit einer Konzentration in der Größenordnung von 35 bis 50 % zu ergeben, die geeignet ist, mit einem Anteil von 5 bis 15 % der Verbrauchsmenge wieder in die frischen Streichmassen geleitet zu werden.

7. Verfahren nach Anspruch 1, **dadurch gekennzeichnet, dass** die Dichte und die Menge des rückgewonnenen Streichmassen-Gemischs mittels eines Massen- und Volumen-Durchsatzmessers (56) angepasst werden, der mit Regulierungsventilen (57) zusammenwirkt, die am Ausgang der jeweiligen Rohrleitungen (54, 48) des Konzentrats und des Retentats eingesetzt sind.

8. Vorrichtung zur Behandlung der in Industrie- und/oder Landwirtschaftsabwässern enthaltenen trüben Schadstoffe, die umfasst:
- einen Zentrifugal-Klärungsbehälter (10), der so vorgesehen ist, dass er die zu behandelnden, im Schadstoff enthaltenen ungelösten Substanzen trennt und die Füllstoffe und Pigmente, die das Konzentrat bilden, ohne chemisches Ausflockungsmittel rückgewinnt,
- eine Ultrafiltrationsvorrichtung (36) mit Keramikmembran, die die von dem Zentrifugal-Klärungsbehälter (10) kommende, aufschwimmende Flüssigkeit filtert, um die Bindemittel zurückzuhalten, die das Retentat bilden,
- und Vorrichtungen zur Vermengung des Konzentrats mit dem Retentat entsprechend einer vorbestimmten Dichte und einem vorbestimmten Durchsatz.

9. Vorrichtung zur Behandlung der Schadstoffe nach Anspruch 8, **dadurch gekennzeichnet, dass** der Zentrifugal-Klärungsbehälter (10) einen Schleuderraum (24) enthält, der die aufschwimmende Flüssigkeit abgeben soll, sowie eine kegelstumpfförmige Austragschnecke (26) für das Austragen des Konzentrats zu einem Homogenisierungsbehälter (30) hin, wobei der Zentrifugalbehälter (10) und die Austragschnecke (26) zur Anpassung der Konzentration des Konzentrats mit unterschiedlichen Umdrehungsgeschwindigkeiten drehen.

10. Vorrichtung zur Behandlung der Schadstoffe nach Anspruch 8, **dadurch gekennzeichnet, dass** die Ultrafiltrationsvorrichtung (36) einen Rohrleitungskreislauf (40) umfasst, der mit einer Umwälzpumpe (42) für die aufschwimmende Flüssigkeit, mindestens einem Tangential-Filtriermodul (44) mit einer Membran mit Keramikträger, die ein Abschaltvermögen von 20 Nanometer hat, sowie Vorrichtungen zum Strömenlassen der aufschwimmenden Flüssigkeit in dem Rohrleitungskreislauf mit einer Geschwindigkeit von etwa 5 m/s zur Sicherstellung der Selbstreinigung der Membran versehen ist.
